# EUROPEAN PATENT APPLICATION

(11) **EP 4 622 319 A1**
(43) Date of publication of application: **24.09.2025**
(21) Application number: 22969582.0
(22) Date of filing: 28.12.2022
(51) Int. Cl.: H04W 24/02

(54) **COMMUNICATION METHOD AND COMMUNICATION APPARATUS**

(71) Applicant: Huawei Technologies Co., Ltd., Shenzhen, Guangdong 518129 (CN)
(72) Inventor: CHEN, Haifeng, Shenzhen, Guangdong 518129 (CN); WU, Xiaochuan, Shenzhen, Guangdong 518129 (CN); MA, Ning, Shenzhen, Guangdong 518129 (CN)
(74) Representative: Goddar, Heinz J.
(86) International application number: PCT/CN2022/142859
(87) International publication number: WO 2024/138430

(57) **Abstract**

This application provides a communication method and a communication apparatus. Configuration data used to activate a first apparatus may be obtained from a network management device based on first information indicating an installation status of the first apparatus of an access network device. In other words, the network management device may deliver the configuration data at a granularity of a communication device that forms the access network device, to implement site deployment at the granularity of the communication device. This helps improve flexibility of the site deployment.

## Description

### TECHNICAL FIELD

Embodiments of this application relate to the communication field, and more specifically, to a communication method and a communication apparatus.

### BACKGROUND

Site deployment of an access network device usually includes two phases: an installation phase and a commissioning phase. In the installation phase, a site maintenance engineer performs hardware connection based on an installation drawing of the access network device to complete installation of the access network device. In the commissioning phase, the site maintenance engineer transfers a site name and an electronic serial number (electronic serial number, ESN) of the access network device to a back-end network management engineer. The network management engineer associates site-deployment data with the ESN based on the site name and the ESN, and then notifies the site maintenance engineer that configuration of the site-deployment data is completed. The site maintenance engineer powers on the access network device. After being powered on, the access network device obtains the site-deployment data corresponding to the ESN from a network management device based on the ESN, to activate the access network device.

Currently, the site deployment of the access network device is performed at a granularity of an entire access network device, resulting in insufficient flexibility.

### SUMMARY

Embodiments of this application provide a communication method and a communication apparatus, to improve flexibility of site deployment.

According to a first aspect, a communication method is provided. The method may be performed by a radio frequency unit of an access network device, a baseband unit of the access network device, or a collection apparatus independent of the access network device (referred to as a collection apparatus for short below), or may be performed by a module or a unit in the radio frequency unit of the access network device, the baseband unit of the access network device, or the collection apparatus.

The method includes: obtaining first information, where the first information indicates an installation status of a first apparatus of the access network device, the first information is used to obtain configuration data of the first apparatus, and the configuration data is used to activate the first apparatus; and sending the first information.

The first apparatus of the access network device is a part of the access network device, and may be an independent communication device, for example, the baseband unit or the radio frequency unit of the access network device. The baseband unit may be a BBU (baseband unit), and the radio frequency unit may be a remote radio unit (remote radio unit, RRU), a radio frequency unit (radio frequency unit, RFU), an active antenna unit (active antenna unit, AAU), a remote radio head (remote radio head, RRH), or the like.

In the foregoing method, the configuration data used to activate the first apparatus may be obtained based on the first information indicating the installation status of the first apparatus. In other words, the configuration data may be delivered at a granularity of a communication device that forms the access network device, to implement site deployment at the granularity of the communication device. This helps improve flexibility of the site deployment.

With reference to the first aspect, in a possible implementation, the first information includes at least one of the following information: location information, azimuth information, or height information.

Because an installation status (for example, a location, an azimuth, or a height for installation) of the communication device that forms the access network device is closely related to the configuration data of the communication device, communication devices that are included in the access network device may be accurately distinguished from each other based on installation statuses. Therefore, in the foregoing method, the configuration data of the first apparatus may be accurately obtained based on at least one of the location information, the azimuth information, or the height information that indicates the first apparatus.

With reference to any one of the first aspect or the implementations of the first aspect, in another possible implementation, sending the first information includes: sending the first information to a network management device; and the method further includes: receiving the configuration data from the network management device, where the configuration data is associated with the first information.

For example, if the radio frequency unit of the access network device, the baseband unit of the access network device, or the collection apparatus may access the network management device, after obtaining the first information, the radio frequency unit of the access network device, the baseband unit of the access network device, or the collection apparatus may directly communicate with the network management device, and obtain, based on the first information, the configuration data associated with the first information.

With reference to any one of the first aspect or the implementations of the first aspect, in another possible implementation, the method further includes: sending the configuration data to the first apparatus.

For example, when the method is performed by the baseband unit of the access network device or the collection apparatus, and the first apparatus is the radio frequency unit that accesses the network management device, the baseband unit of the access network device or the collection apparatus may further send the configuration data to the radio frequency unit after obtaining the configuration data, to help activate the radio frequency unit.

With reference to any one of the first aspect or the implementations of the first aspect, in another possible implementation, obtaining the first information includes: collecting the first information, or receiving the first information.

For example, when the first apparatus is the radio frequency unit of the access network device, and the method is performed by the collection apparatus or the radio frequency unit, the first information may be obtained through collection.

For another example, when the first apparatus is the radio frequency unit of the access network device, and the method is performed by the radio frequency unit, the radio frequency unit may receive the first information from a collection unit.

For another example, when the first apparatus is the radio frequency unit of the access network device, and the method is performed by the baseband unit of the access network device, the baseband unit may receive the first information from the radio frequency unit.

With reference to any one of the first aspect or the implementations of the first aspect, in another possible implementation, sending the first information includes: sending the first information to the first apparatus.

For example, when the first apparatus is the radio frequency unit of the access network device, the method is performed by the collection apparatus, and the collection apparatus cannot access a network management device, the collection apparatus may send the first information to the radio frequency unit, so that the radio frequency unit sends the first information to the network management device. In other words, the collection apparatus collects the first information and provides the first information for the radio frequency unit, and then the radio frequency unit obtains configuration data of the radio frequency unit from the network management device by using the first information.

With reference to any one of the first aspect or the implementations of the first aspect, in another possible implementation, a manner used for communicating with the first apparatus includes at least one of the following manners: device-to-device, sidelink, proximity-based services, Bluetooth, wireless fidelity, wireless fidelity direct, Zigbee, radio frequency identification, infrared data association, ultra-wideband, near-field communication, Ethernet, or serial communication.

With reference to any one of the first aspect or the implementations of the first aspect, in another possible implementation, sending the first information includes: sending the first information to the baseband unit of the access network device; and the method further includes: receiving the configuration data from the baseband unit, where the configuration data is associated with the first information, and the configuration data is obtained by the baseband unit from a network management device.

For example, when the first apparatus is the radio frequency unit of the access network device, the method is performed by the radio frequency unit, and the radio frequency unit cannot access the network management device, the radio frequency unit may communicate with the network management device via the baseband unit, including sending the first information or receiving the configuration data.

With reference to any one of the first aspect or the implementations of the first aspect, in another possible implementation, obtaining the first information includes: collecting the first information or receiving the first information.

For example, when the first apparatus is the radio frequency unit of the access network device, and the method is performed by the radio frequency unit, the first information may be obtained through collection, or the first information may be received from the collection apparatus.

According to a second aspect, a communication method is provided. The communication method may be performed by a network management device, or may be performed by a module or a unit in the network management device.

The method includes: receiving first information, where the first information indicates an installation status of a first apparatus of an access network device; obtaining configuration data associated with the first information, where the configuration data is configuration data of the first apparatus, and the configuration data is used to activate the first apparatus; and sending the configuration data.

The first apparatus of the access network device is a part of the access network device, and may be an independent communication device, for example, a baseband unit or a radio frequency unit of the access network device. The baseband unit may be a BBU, and the radio frequency unit may be an RRU, an RFU, an AAU, an RRH, or the like.

In the foregoing method, the configuration data used to activate the first apparatus may be obtained based on the first information indicating the installation status of the first apparatus. In other words, the configuration data may be delivered at a granularity of a communication device that forms the access network device, to implement site deployment at the granularity of the communication device. This helps improve flexibility of the site deployment.

With reference to the second aspect, in a possible implementation, the first information includes at least one of the following information: location information, azimuth information, or height information.

Because an installation status (for example, a location, a height, or an azimuth for installation) of the communication device that forms the access network device is closely related to the configuration data of the communication device, communication devices that are included in the access network device may be accurately distinguished from each other based on installation statuses. Therefore, in the foregoing method, the configuration data of the first apparatus may be accurately obtained based on at least one of the location information, the azimuth information, or the height information that indicates the first apparatus.

With reference to any one of the second aspect or the implementations of the second aspect, in another possible implementation, receiving the first information includes: receiving the first information from the first apparatus or a second apparatus, where the first apparatus is different from the second apparatus, and the first apparatus includes the radio frequency unit and/or the baseband unit.

In other words, the first apparatus or the second apparatus other than the first apparatus may provide the installation status of the first apparatus for the network management device. For example, when the first apparatus is the radio frequency unit, the second apparatus may be the baseband unit or a collection apparatus.

With reference to any one of the second aspect or the implementations of the second aspect, in another possible implementation, sending the configuration data includes: sending the configuration data to the first apparatus or a second apparatus, where the first apparatus is different from the second apparatus, and the first apparatus includes the radio frequency unit and/or the baseband unit.

In other words, the network management device may provide the configuration data of the first apparatus for the first apparatus or the second apparatus other than the first apparatus. For example, when the first apparatus is the radio frequency unit, the second apparatus may be the baseband unit or the collection apparatus.

According to a third aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a communication unit.

In an implementation, the apparatus is a radio frequency unit of an access network device, a baseband unit of the access network device, a collection apparatus, or a network management device. When the apparatus is the radio frequency unit of the access network device, the baseband unit of the access network device, the collection apparatus, or the network management device, the communication unit may be a transceiver, an input/output interface, or a communication interface, and the processing unit may be at least one processor. Optionally, the transceiver is a transceiver circuit. Optionally, the input/output interface is an input/output circuit.

In another implementation, the apparatus is a chip, a chip system, or a circuit used in a radio frequency unit of an access network device, a baseband unit of the access network device, a collection apparatus, or a network management device. When the apparatus is the chip, the chip system, or the circuit used in the radio frequency unit of the access network device, the baseband unit of the access network device, the collection apparatus, or the network management device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fourth aspect, a communication apparatus is provided. The apparatus includes: a memory, configured to store a program; and at least one processor, configured to execute the computer program or instructions stored in the memory, to perform the method provided in any one of the foregoing aspects or the implementations of the foregoing aspects.

In an implementation, the apparatus is a radio frequency unit of an access network device, a baseband unit of the access network device, a collection apparatus, or a network management device.

In another implementation, the apparatus is a chip, a chip system, or a circuit used in a radio frequency unit of an access network device, a baseband unit of the access network device, a collection apparatus, or a network management device.

According to a fifth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a sixth aspect, a processor is provided, configured to perform the methods provided in the foregoing aspects.

Unless otherwise specified, or if operations such as sending and obtaining/receiving related to the processor do not conflict with actual functions or internal logic of the operations in related descriptions, the operations may be understood as operations such as output and receiving or input performed by the processor, or may be understood as sending and receiving operations performed by a radio frequency circuit and an antenna. This is not limited in this application.

According to a seventh aspect, a computer-readable storage medium is provided. The computer-readable medium stores program code to be executed by a device, and the program code is used to perform the method provided in any one of the foregoing aspects or the implementations of the foregoing aspects.

According to an eighth aspect, a computer program product including instructions is provided. When the computer program product runs on a computer, the computer is enabled to perform the method provided in any one of the foregoing aspects or the implementations of the foregoing aspects.

According to a ninth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a quantity of chips that implement the method in this application is not specifically limited in this application. For example, the method may be performed by one chip, or may be performed by two or more chips. In addition, when there are two or more chips that implement the method in this application, a chip manufacturer is not limited. The chips may be from a same manufacturer or from different manufacturers.

According to a tenth aspect, a computer program is provided. When the computer program is run on a computer, the method provided in any one of the foregoing aspects or the implementations of the foregoing aspects is performed.

According to an eleventh aspect, a communication system is provided, and includes a communication apparatus and a network management device that are configured to perform the method according to the first aspect or the implementations of the first aspect.

### BRIEF DESCRIPTION OF DRAWINGS

FIG. 1 is an architecture of a system applicable to a method according to an embodiment of this application;
FIG. 2 is a schematic flowchart of a communication method 200 according to an embodiment of this application;
FIG. 3 is a schematic flowchart of a communication method 300 according to an embodiment of this application;
FIG. 4 is an example of a communication method according to an embodiment of this application;
FIG. 5 is a diagram of a structure of an apparatus according to an embodiment of this application;
FIG. 6 is a diagram of another structure of an apparatus according to an embodiment of this application; and
FIG. 7 is a diagram of another structure of an apparatus according to an embodiment of this application.

### DESCRIPTION OF EMBODIMENTS

For ease of understanding embodiments of this application, before embodiments of this application are described, the following descriptions are first provided.

In this application, "indicating" may include a direct indication and an indirect indication, or "indicating" may be an explicit indication and/or an implicit indication. For example, when a piece of information is described as indicating information I, the information may directly indicate I or indirectly indicate I, but it does not necessarily indicate that the information carries I. For another example, the implicit indication may be based on a location and/or a resource used for transmission; and the explicit indication may be based on one or more parameters, and/or one or more indexes, and/or one or more bit patterns represented by the information.

In the following embodiments, first, second, third, fourth, and various numbers are merely used for distinguishing for ease of description, but are not used to limit the scope of embodiments of this application. For example, the numbers are used for distinguishing between different apparatuses and different information.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, words such as "example", "for example", "such as", and "in an (another) example" are used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

The terms "include", "have", and their variants all mean "include but are not limited to", unless otherwise specifically emphasized in another manner.

"At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

"Sending information to ... X" may be understood as that a destination end of the information is X, and may include directly or indirectly sending the information to X. "Receiving information from ... X" may be understood as that a source end of the information is X, and may include directly or indirectly receiving the information from X. Necessary processing, for example, a format change, may be performed on the information between the information sending source end and destination end, but the destination end may understand valid information from the source end. Similar descriptions in this application may be understood in a similar manner, and details are not described below again.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

The following describes the technical solutions in embodiments of this application with reference to the accompanying drawings.

The technical solutions in embodiments of this application may be applied to various communication systems, for example, a long term evolution (long term evolution, LTE) system, a frequency division duplex (frequency division duplex, FDD) system, a time division duplex (time division duplex, TDD) system, a worldwide interoperability for microwave access (worldwide interoperability for microwave access, WiMAX) communication system, a 5th generation (5th generation, 5G) system, a new radio (new radio, NR) system, a 6th generation (6th generation, 6G) system, or a future communication system. The 5G communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine-to-machine (machine-to-machine, M2M) communication system, an internet of things (internet of things, IoT) communication system, a vehicle-to-everything (vehicle-to-everything, V2X) communication system, an uncrewed aerial vehicle (uncrewed aerial vehicle, UAV) communication system, or another communication system.

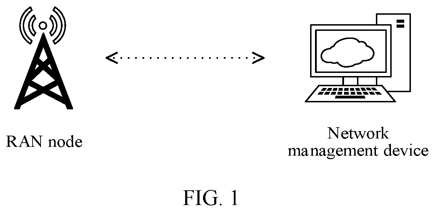

For example, FIG. 1 is an architecture of a system applicable to a method according to an embodiment of this application. As shown in FIG. 1, the system includes at least one access network (radio access network, RAN) node (FIG. 1 shows only one RAN node) and a network management device. The RAN node may communicate with a network management system. For example, when site deployment of the RAN node is performed, the RAN node may obtain configuration data of the RAN node from the network management device.

The network management device may also be referred to as a network management system, a back-end network management system, a network element management system, a network element management device, a network management system, a network management device, or the like. For ease of description, the terms are collectively referred to as the network management device below. The configuration data of the RAN node is used to activate the RAN node. The configuration data may also be referred to as site-deployment data, site-deployment configuration data, or configuration information. Similarly, for ease of description, the terms are collectively referred to as the configuration data below.

A radio access network including the RAN node may be a cellular system related to a 3rd generation partnership project (3rd generation partnership project, 3GPP), for example, a 4th generation (4th generation, 4G) mobile communication system, a 5G mobile communication system, or a future-oriented evolved system (for example, a 6G mobile communication system). The radio access network may alternatively be an open access network (open RAN, O-RAN, or ORAN) or a cloud radio access network (cloud radio access network, CRAN). The radio access network may alternatively be a communication system that integrates the foregoing two or more systems.

The RAN node may also be referred to as an access network device, a RAN entity, an access node, or the like sometimes, and forms a part of the communication system, to help a terminal implement radio access. Main functions of the RAN node include: radio resource management, user data flow management, mobility management entity selection performed during attachment of user equipment, user plane data routing, organization and sending of a paging message, organization and sending of a broadcast message, measurement for mobility or scheduling, configuration of a measurement report, and the like. A plurality of RAN nodes in the system may be nodes of a same type, or may be nodes of different types.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation NodeB in a 6G mobile communication system, a base station in a future mobile communication system, or the like. The RAN node may be a macro base station, a micro base station, an indoor base station, a relay node, a donor node, or a radio controller in a CRAN scenario. Optionally, the RAN node may alternatively be a server, a wearable device, a vehicle, a vehicle-mounted device, or the like. For example, a RAN node in a V2X technology may be a road side unit (road side unit, RSU).

In another possible scenario, a plurality of RAN nodes work together to assist the terminal in implementing radio access, and different RAN nodes separately implement some functions of a base station. For example, the RAN node may be a central unit (central unit, CU), a distributed unit (distributed unit, DU), a radio unit (radio unit, RU), or the like. The CU and the DU may be separately disposed, or may be included in a same network element, for example, a BBU. The RU may be included in a radio frequency device or a radio frequency unit, for example, included in an RRU, an RFU, an AAU, or an RRH.

In different systems, the CU, the DU, or the RU may also be called by different names, but a person skilled in the art may understand meanings of the names. For example, in an ORAN system, the CU may also be referred to as an open CU (open-CU, O-CU), the DU may also be referred to as an open DU (open-DU, O-DU), and the RU may also be referred to as an open RU (open-RU, O-RU). For ease of description, the CU, the DU, and the RU are used as an example for description in this application. Any unit of the CU, the DU, and the RU in this application may be implemented by using a software module, a hardware module, or a combination of a software module and a hardware module.

Embodiments of this application may be applied to a site deployment process of an access network device.

Currently, site deployment of the access network device usually includes two phases: an installation phase and a commissioning phase.

In the installation phase, a site maintenance engineer performs hardware connection based on an installation drawing of the access network device to complete installation of the access network device. In the commissioning phase, in one method, the site maintenance engineer transfers a site name and an ESN of the access network device to a back-end network management engineer. The network management engineer associates configuration data with the ESN based on the site name and the ESN, and then notifies the site maintenance engineer that configuration of the configuration data is completed. The site maintenance engineer powers on the access network device. After being powered on, the access network device reports the ESN of the access network device to a network management device to obtain the configuration data corresponding to the ESN, so as to complete activation of the access network device. In another method, after being powered on, the access network device reports location information of the access network device to a network management device to obtain configuration data, so that the configuration data can be automatically obtained, to complete activation of the access network device.

The configuration data in the foregoing methods is configuration data of the access network device, for example, includes two parts: an RU and a DU. In other words, the configuration data is at a granularity of the access network device, that is, site deployment is at a granularity of the access network device, resulting in insufficient flexibility.

This application provides a communication method for the foregoing problem, to improve flexibility of site deployment.

Specifically, site deployment of a first apparatus of an access network device is used as an example. In the communication method, first information indicating an installation status of the first apparatus may be obtained, and configuration data used to activate the first apparatus may be obtained from a network management device based on the first information, to implement the site deployment of the first apparatus. The first apparatus is a part of the access network device, and may be an independent communication device, for example, a DU or an RU of a distributed base station. The DU may be a BBU or the like, and the RU may be an RRU, an RFU, an AAU, an RRH, or the like.

In a first scenario, the first information may be collected by a collection apparatus. The collection apparatus may be an apparatus other than the access network device, for example, a terminal device. In a second scenario, the first information may be collected by the first apparatus, that is, the first apparatus may collect the installation status of the first apparatus to obtain the configuration data of the first apparatus. For example, the first apparatus is the RU. The RU may be enhanced, so that the RU can collect an installation status of the RU.

For ease of understanding, the following uses an example in which the first apparatus is the RU for description.

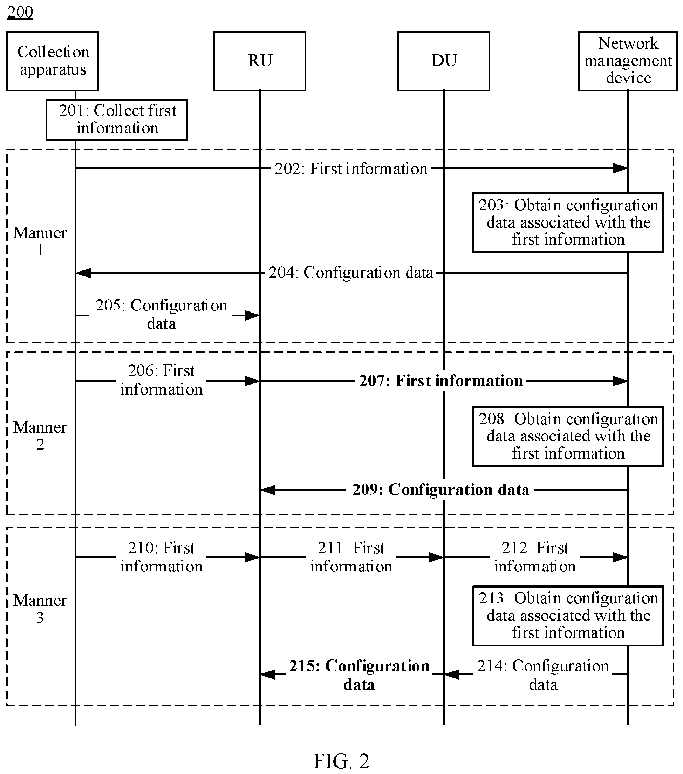

The following describes the technical solution in the first scenario with reference to FIG. 2.

FIG. 2 is a schematic flowchart of a communication method 200 according to an embodiment of this application. The method 200 may be performed by a collection apparatus, an RU, a DU, and a network management device, or may be performed by a module or a unit (for example, a circuit or a system on chip (system on chip, SoC)) in the collection apparatus, the RU, the DU, and the network management device. A uniform description is the collection apparatus, the RU, the DU, and the network management device below.

Step 201: The collection apparatus collects first information.

The first information indicates an installation status of the RU of an access network device.

For example, the first information includes at least one of the following information: location information of the RU, azimuth information of the RU, or height information of the RU. The location information of the RU may be, for example, longitude and latitude of the RU. The azimuth information of the RU may be, for example, a geomagnetic azimuth of the RU.

For example, it is assumed that the first information includes the location information and the azimuth information. When the collection apparatus is located near the RU, location information of the collection apparatus may be considered as the location information of the RU. Therefore, the collection apparatus may collect the location information of the collection apparatus, and the location information may indicate a location of the RU. When an azimuth of the collection apparatus is the same as or approximately the same as an azimuth of the RU, azimuth information of the collection apparatus may be considered as the azimuth information of the RU. Therefore, the collection apparatus may collect the azimuth information of the collection apparatus, and the azimuth information may indicate the azimuth of the RU.

In the first scenario, there are many manners of obtaining configuration data of the RU based on the first information. For example, the following several manners may be included.

Manner 1 is shown in steps 202 to 205.

Step 202: The collection apparatus sends the collected first information to the network management device, or the network management device receives the first information from the collection apparatus.

Step 203: The network management device obtains configuration data associated with the first information.

The configuration data is configuration data of a first apparatus, and the configuration data is used to activate the first apparatus.

In an implementation, an association relationship between the first information and the configuration data is pre-configured in the network management device. After receiving the first information, the network management device may obtain, based on the first information and the association relationship between the first information and the configuration data, the configuration data associated with the first information.

An implementation of pre-configuring the association relationship between the first information and the configuration data is not limited in this embodiment of this application. In an example, first, based on a network planning and layout requirement, deployment locations, types, and directions of communication devices, including the RU, in the access network device are planned based on location information on a map. Then, configuration data of the communication devices is pre-configured on the network management device based on site-deployment information of the communication devices. The site-deployment information may include at least one of location information, azimuth information, or height information.

Step 204: The network management device sends the obtained configuration data to the collection apparatus, or the collection apparatus receives the configuration data from the network management device.

Step 205: The collection apparatus sends the received configuration data to the RU, or the RU receives the configuration data from the collection apparatus.

A communication manner used by the collection apparatus to communicate with the RU is not limited in this embodiment of this application, and may be a wired or wireless communication manner. For example, the communication manner may include at least one of the following manners: D2D, sidelink (sidelink), proximity-based services (proximity-based services, ProSe), Bluetooth, wireless fidelity (wireless fidelity, Wi-Fi), Wi-Fi direct, Zigbee (Zigbee), radio frequency identification (radio frequency identification, RFID), infrared data association (infrared data association, IrDA), ultra-wideband (ultra-wide bandwidth, UWB), near-field communication (near-field communication, NFC), Ethernet, or serial communication. The serial communication may include recommended standard 485 (recommended standard 485, RS485) interface communication, recommended standard 232 (recommended standard 232, RS232) interface communication, and/or the like.

In manner 1, the collection apparatus may access the network management device. Therefore, the collection apparatus may directly provide the first information for the network management device to obtain the configuration data of the RU, and further transmit the obtained configuration data to the RU.

Manner 2 is shown in steps 206 to 209.

Step 206: The collection apparatus sends the obtained first information to the RU, or the RU receives the first information from the collection apparatus.

For a communication manner used by the collection apparatus to communicate with the RU, refer to the descriptions in step 205. Details are not described again.

Step 207: The RU sends the received first information to the network management device, or the network management device receives the first information from the RU.

Step 208: The network management device obtains configuration data associated with the first information. For an implementation of step 208, refer to step 203. Details are not described herein again.

Step 209: The network management device sends the obtained configuration data to the RU, or the RU receives the configuration data from the network management device.

It should be noted that, in manner 2, after the network management device sends the configuration data associated with the first information to the RU, site deployment of the RU may be implemented. Therefore, the RU does not need to send the configuration data to the collection apparatus.

In manner 2, the collection apparatus is responsible for collecting the first information and providing the first information for the RU, and then the RU directly obtains the configuration data of the RU from the network management device based on the first information. In manner 2, the RU may be understood as an RU that is independently run and maintained, that is, information exchange may be implemented between the RU and the network management device.

Manner 3 is shown in steps 210 to 215.

Step 210: The collection apparatus sends the obtained first information to the RU, or the RU receives the first information from the collection apparatus.

For a communication manner used by the collection apparatus to communicate with the RU, refer to the descriptions in step 205. Details are not described again.

Step 211: The RU sends the received first information to the DU, or the DU receives the first information from the RU.

Step 212: The DU sends the received first information to the network management device, or the network management device receives the first information from the DU.

Step 213: The network management device obtains configuration data associated with the first information. For an implementation of step 213, refer to step 203. Details are not described herein again.

Step 214: The network management device sends the obtained configuration data to the DU, or the DU receives the configuration data from the network management device.

Step 215: The DU sends the received configuration data to the RU, or the RU receives the configuration data from the DU.

Similarly, in manner 3, after the RU obtains the configuration data, site deployment of the RU may be implemented. Therefore, the RU does not need to send the configuration data to the collection apparatus.

In manner 3, the collection apparatus is responsible for collecting the first information and providing the first information for the RU, and then the RU obtains the configuration data of the RU from the network management device via the DU by using the first information.

It should be noted that the foregoing manner 1 to manner 3 are merely examples, and the solutions of this application are not limited thereto. Implementations formed by combining some steps in the foregoing manner 1 to manner 3 in appropriate manners also fall within the protection scope of this application, for example, a combination of steps 202, 203, and 209, a combination of steps 202, 203, 214, and 215, and a combination of steps 206, 207, 208, 214, and 215.

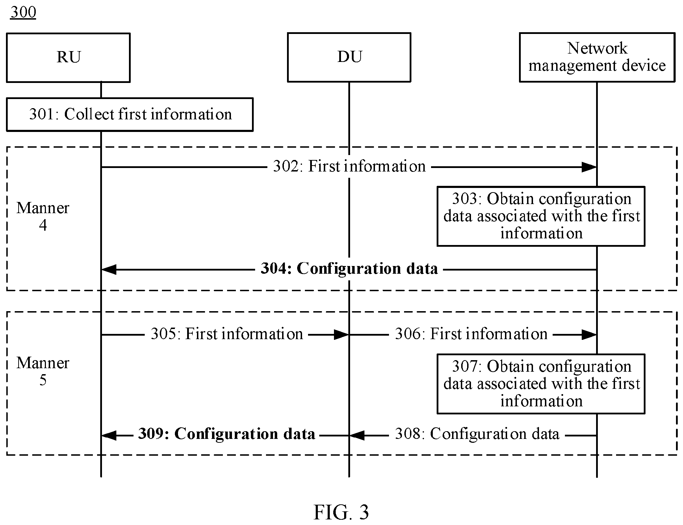

The following describes the technical solution in the second scenario with reference to FIG. 3.

FIG. 3 is a schematic flowchart of a communication method 300 according to an embodiment of this application. The method 300 may be performed by an RU, a DU, and a network management device, or may be performed by a module or a unit (for example, a circuit or a SoC) in the RU, the DU, and the network management device. A uniform description is the RU, the DU, and the network management device below.

Step 301: The RU collects first information.

The first information indicates an installation status of the RU of an access network device.

For example, the first information includes at least one of the following information: location information of the RU, azimuth information of the RU, or height information of the RU. The location information of the RU may be, for example, longitude and latitude of the RU. The azimuth information of the RU may be, for example, a geomagnetic azimuth of the RU.

In an implementation, performance of the RU may be enhanced, so that the RU can collect the installation status of the RU.

In the second scenario, there are many manners of obtaining configuration data of the RU based on the first information. The following several manners are used as examples for description.

Manner 4 is shown in steps 302 to 304.

Step 302: The RU sends the collected first information to the network management device, or the network management device receives the first information from the RU.

Step 303: The network management device obtains configuration data associated with the first information.

For an implementation of step 303, refer to step 203. Details are not described herein again.

Step 304: The network management device sends the obtained configuration data to the RU, or the RU receives the configuration data from the network management device.

In manner 4, the RU collects the first information, and directly obtains the configuration data of the RU from the network management device based on the first information.

Manner 5 is shown in steps 305 to 309.

Step 305: The RU sends the collected first information to the DU, or the DU receives the first information from the RU.

Step 306: The DU sends the received first information to the network management device, or the network management device receives the first information from the DU.

Step 307: The network management device obtains configuration data associated with the first information. For an implementation of step 307, refer to step 203. Details are not described herein again.

Step 308: The network management device sends the obtained configuration data to the DU, or the DU receives the configuration data from the network management device.

Step 309: The DU sends the received configuration data to the RU, or the RU receives the configuration data from the DU.

In manner 5, the RU collects the first information, and obtains the configuration data of the RU from the network management device via the DU by using the first information.

It should be noted that the foregoing manner 4 and manner 5 are merely examples, and the solutions of this application are not limited thereto. Implementations formed by combining some steps in the foregoing manner 4 and manner 5 in appropriate manners also fall within the protection scope of this application, for example, a combination of steps 302, 303, 308, and 309.

In this case, in the communication method provided in this application, the configuration data used to activate the first apparatus may be obtained from the network management device based on the first information indicating the installation status of the first apparatus. In other words, the network management device may deliver the configuration data at a granularity of a communication device that forms the access network device (referred to as a communication device for short below), to implement site deployment at the granularity of the communication device. This helps improve flexibility of the site deployment.

In addition, because an installation status (for example, a location, a height, or an azimuth for installation) of the communication device is closely related to the configuration data of the communication device, communication devices that are included in the access network device may be accurately distinguished from each other based on installation statuses of the communication devices. Therefore, in the communication method provided in this application, the network management device associates the installation status with the configuration data, and may accurately obtain the configuration data of the first apparatus based on the first information indicating the installation status of the first apparatus. In addition, in comparison with a manner of obtaining the configuration data by using an ESN, in the communication method provided in this application, manual participation may be reduced, and a site deployment procedure may be simplified.

The following describes the communication method in this application with reference to a specific example.

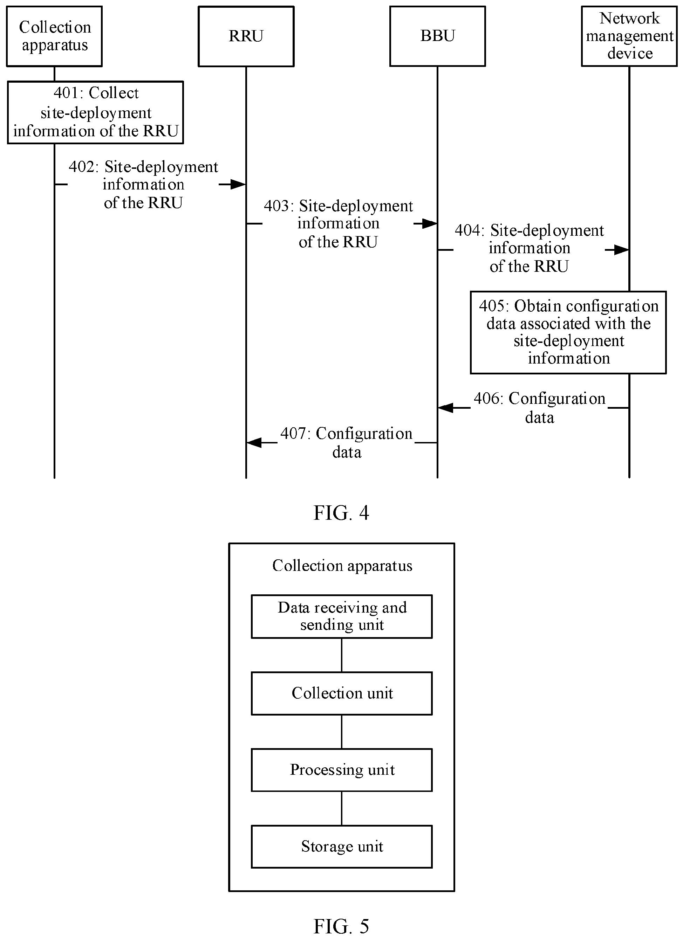

FIG. 4 is an example of a communication method according to an embodiment of this application.

This example is a further description of the foregoing manner 3. Descriptions of steps in FIG. 4 and descriptions of the steps in manner 3 may be mutually referenced. In this example, an example in which first information is site-deployment information, a base station is an access network device, and an RRU is a part of the base station is used for description.

An association relationship between configuration data and the site-deployment information is pre-configured in a network management device. In one manner, the network management device may plan configuration data of the RRU based on a location and a sector direction of a communication device. Specifically, based on a network planning and layout requirement, deployment locations, types, and directions of RRUs in the base station are planned based on location information on a map. Then, configuration data of the RRUs is pre-configured on the network management device based on site-deployment information (including the deployment locations, sector directions, and the like) of the RRUs.

Table 1 shows an example of the configuration data in the network management device.

**Table 1**

| Longitude | Latitude | Geomagnetic azimuth | Configuration data |
|---|---|---|---|
| Longitude 1 | Latitude 1 | Geomagnetic azimuth 1 | Configuration data 1 of an RRU 1 |
| Longitude 2 | Latitude 2 | Geomagnetic azimuth 2 | Configuration data 2 of an RRU 2 |
| ... | ... | ... | ... |

In this case, the configuration data may be delivered step by step based on a single RRU subsequently, to implement dynamic site deployment of the communication device in the base station.

Step 401: A collection apparatus collects the site-deployment information of the RRU.

Specifically, after device installation is completed based on network planning, the collection apparatus (for example, a mobile phone) collects the site-deployment information of the RRU.

The site-deployment information includes latitude and longitude information and geomagnetic azimuth information of the RRU.

Step 402: The collection apparatus uploads the collected site-deployment information to the RRU.

For example, after the RRU is powered on, the collected site-deployment information is uploaded to the RRU in a Wi-Fi communication manner.

Step 403: The RRU uploads the site-deployment information to a BBU in the base station.

Step 404: The BBU in the base station sends the site-deployment information of the RRU to the network management device.

Step 405: The network management device obtains the configuration data based on the received site-deployment information.

Specifically, the network management device may find, based on the site-deployment information, configuration data corresponding to the site-deployment information from the pre-configured association relationship between the configuration data and the site-deployment information.

For example, with reference to Table 1, when the site-deployment information includes the longitude 1, the latitude 1, and the geomagnetic azimuth 1, the network management device may obtain the configuration data 1 of the RRU 1.

Step 406: The network management device delivers the obtained configuration data to the BBU in the base station.

Specifically, the network management device automatically downloads the obtained configuration data to the BBU in the base station.

The example in step 405 is used as an example. In this step, the network management device sends the configuration data 1 to the BBU in the base station.

Step 407: The BBU in the base station validates the configuration data.

Specifically, the BBU in the base station delivers and activates the configuration data of the RRU, to complete site deployment of the RRU.

It should be noted that, if the foregoing manner 1 is used, after step 401, the collection apparatus may directly upload the collected site-deployment information to the network management device. The network management device obtains, based on the received site-deployment information and the pre-configured association relationship between the configuration data and the site-deployment information, configuration data associated with the site-deployment information, and delivers the configuration data to the collection apparatus. Then, the collection apparatus transmits and activates the configuration data of the RRU, to complete site deployment of the RRU. If the foregoing manner 2 is used, after step 402, the RRU may directly upload the received site-deployment information to the network management device. The network management device obtains, based on the received site-deployment information and the pre-configured association relationship between the configuration data and the site-deployment information, configuration data associated with the site-deployment information, and delivers and activates the configuration data of the RRU, to complete site deployment of the RRU. If the foregoing manner 4 is used, 401 is not performed, and the RRU collects the site-deployment information of the RRU, and directly uploads the site-deployment information to the network management device. The network management device obtains, based on the received site-deployment information and the pre-configured association relationship between the configuration data and the site-deployment information, configuration data associated with the site-deployment information, and delivers and activates the configuration data of the RRU, to complete site deployment of the RRU. If the foregoing manner 5 is used, 401 is not performed, and the RRU collects the site-deployment information of the RRU. For subsequent steps, refer to steps 403 to 407.

The foregoing describes in detail the methods provided in this application with reference to FIG. 2 to FIG. 4. The following describes in detail apparatus embodiments of this application with reference to FIG. 5 to FIG. 7.

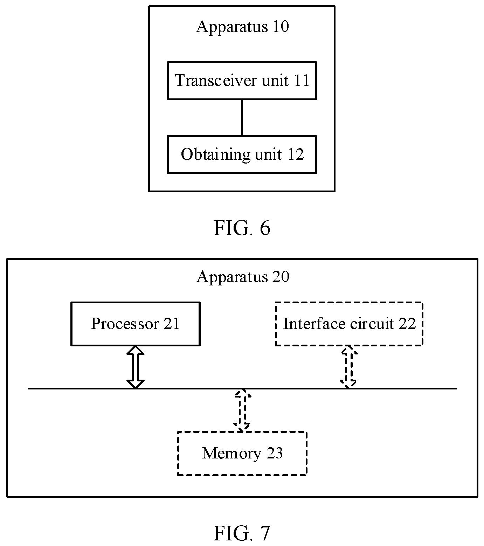

It may be understood that, to implement functions in the foregoing embodiments, apparatuses in FIG. 5 or FIG. 7 include corresponding hardware structures and/or software modules for performing the functions. These apparatuses may be configured to implement functions of the collection apparatus, the RU, the DU, or the network management device in the foregoing method embodiments, and therefore can also achieve beneficial effects of the foregoing method embodiments. A person skilled in the art should be readily aware that, with reference to the units and method steps in the examples described in embodiments disclosed in this application, this application can be implemented by hardware or a combination of hardware and computer software.

FIG. 5 is a diagram of a structure of an apparatus according to an embodiment of this application. The apparatus shown in FIG. 5 may implement functions of the collection apparatus described above.

As shown in FIG. 5, the collection apparatus includes a collection unit, a data receiving and sending unit, a processing unit, and a storage unit. The collection unit is configured to collect first information indicating an installation status of a first apparatus. The data receiving and sending unit is configured to send the collected first information to the first apparatus when the data receiving and sending unit cannot access a network management device, or is configured to directly send the first information to a network management device when the data receiving and sending unit can access the network management device. In this case, the data receiving and sending unit is further configured to: receive configuration data that is associated with the first information and that is delivered by the network management device, and send the received configuration data to the first apparatus. The processing unit is configured to: control data collection logic, receive and send data, and activate the first apparatus based on the configuration data. The storage unit is configured to store the collected first information and the received configuration data.

Optionally, the storage unit may store first information and configuration data that respectively correspond to a plurality of communication devices.

In addition, the collection apparatus further includes a communication interface. The communication interface is configured to support communication between the collection apparatus and the first apparatus, and optionally, is configured to support communication between the collection apparatus and the network management device. For example, the communication interface may be an interface supporting D2D communication, an interface supporting sidelink communication, an interface supporting ProSe communication, an interface supporting Bluetooth communication, an interface supporting Wi-Fi communication, an interface supporting Wi-Fi direct, an interface supporting Zigbee communication, an interface supporting RFID communication, an interface supporting NFC communication, a serial communication interface, an ETH communication interface, or the like.

FIG. 6 is a diagram of another structure of an apparatus according to an embodiment of this application.

As shown in FIG. 6, an apparatus 10 includes a transceiver unit 11 and an obtaining unit 12.

When the apparatus 10 is configured to implement functions of the collection apparatus, the RU, or the DU in the foregoing method embodiments, the obtaining unit 12 is configured to obtain first information, where the first information indicates an installation status of a first apparatus of an access network device, the first information is used to obtain configuration data of the first apparatus, and the configuration data is used to activate the first apparatus; and the transceiver unit 11 is configured to send the first information.

Optionally, the first information includes at least one of the following information: location information, azimuth information, or height information.

Optionally, the transceiver unit 11 is specifically configured to send the first information to a network management device. The transceiver unit 11 is further configured to receive the configuration data from the network management device, where the configuration data is associated with the first information.

Optionally, when the apparatus 10 is the collection apparatus or the DU, the transceiver unit 11 is further configured to send the configuration data to the first apparatus.

Optionally, when the apparatus 10 is the RU or the DU, the obtaining unit 12 is specifically configured to: collect the first information, or receive the first information. When the apparatus 10 is the collection apparatus, the obtaining unit 12 is specifically configured to collect the first information.

Optionally, when the apparatus 10 is the collection apparatus, the transceiver unit 11 is specifically configured to send the first information to the first apparatus.

Optionally, a manner used for communicating with the first apparatus includes at least one of the following manners: device-to-device, sidelink, proximity-based services, Bluetooth, wireless fidelity, wireless fidelity direct, Zigbee, radio frequency identification, infrared data association, ultra-wideband, near-field communication, Ethernet, or serial communication.

Optionally, when the apparatus 10 is the RU, the transceiver unit 11 is specifically configured to send the first information to the DU of the access network device. The transceiver unit 11 is further configured to receive the configuration data from the DU, where the configuration data is associated with the first information, and the configuration data is obtained by the DU from a network management device.

Optionally, the first apparatus includes the RU and/or the DU.

When the apparatus 10 is configured to implement functions of the network management device in the foregoing method embodiments, the transceiver unit 11 is configured to receive first information, where the first information indicates an installation status of a first apparatus of an access network device. The obtaining unit 12 is configured to obtain configuration data associated with the first information, where the configuration data is configuration data of the first apparatus, and the configuration data is used to activate the first apparatus. The transceiver unit 11 is further configured to send the configuration data.

Optionally, the transceiver unit 11 is specifically configured to receive the first information from the first apparatus or a second apparatus, where the first apparatus is different from the second apparatus, and the first apparatus includes an RU and/or a DU.

Optionally, the transceiver unit 11 is specifically configured to send the configuration data to the first apparatus or a second apparatus, where the first apparatus is different from the second apparatus, and the first apparatus includes an RU and/or a DU.

Optionally, the first information includes at least one of the following information: location information, azimuth information, or height information.

For more detailed descriptions of the transceiver unit 11 and the obtaining unit 12, refer to the related descriptions in the foregoing method embodiments. Details are not described herein again.

FIG. 7 is a diagram of another structure of an apparatus according to an embodiment of this application.

As shown in FIG. 7, an apparatus 20 includes a processor 21. The processor 21 is coupled to a memory 23, and the memory 23 is configured to store instructions. When the apparatus 20 is configured to implement the methods described above, the processor 21 is configured to execute the instructions in the memory 23, to implement functions of the obtaining unit 12.

Optionally, the apparatus 20 further includes the memory 23.

Optionally, the apparatus 20 further includes an interface circuit 22. The processor 21 and the interface circuit 22 are coupled to each other. It may be understood that the interface circuit 22 may be a transceiver or an input/output interface. When the apparatus 20 is configured to implement the methods described above, the processor 21 is configured to execute the instructions to implement functions of the obtaining unit 12, and the interface circuit 22 is configured to implement functions of the transceiver unit 11.

For example, when the apparatus 20 is a chip used in a collection apparatus, an RU, a DU, or a network management device, the chip implements functions of the collection apparatus, the RU, the DU, or the network management device in the foregoing method embodiments. The chip receives information from another module in the collection apparatus, the RU, the DU, or the network management device, where the information is sent by another apparatus to the collection apparatus, the RU, the DU, or the network management device. Alternatively, the chip sends information to another module in the collection apparatus, the RU, the DU, or the network management device, where the information is sent by the collection apparatus, the RU, the DU, or the network management device to another apparatus.

In addition, this application further provides an apparatus, including a processor. The processor is coupled to a memory. The memory is configured to store a computer program or instructions and/or data. The processor is configured to: execute the computer program or the instructions stored in the memory, or read the data stored in the memory, to perform the methods in the foregoing method embodiments. Optionally, there are one or more processors. Optionally, the apparatus includes the memory. Optionally, there are one or more memories. Optionally, the memory and the processor are integrated together or disposed separately.

This application further provides a computer-readable storage medium, where the computer-readable storage medium stores computer instructions used for implementing the method performed by the collection apparatus, the RU, the DU, or the network management device in the foregoing method embodiments.

This application further provides a computer program product, including instructions. When the instructions are executed by a computer, the method performed by the collection apparatus, the RU, the DU, or the network management device in the foregoing method embodiments is implemented.

This application further provides a communication system. The communication system includes the collection apparatus, the RU, the DU, or the network management device in the foregoing embodiments.

For explanations and beneficial effects of related content in any apparatus provided above, refer to the corresponding method embodiments provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented by hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or a storage medium in any other form well known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a collection apparatus, an RU, a DU, or a network management device. Certainly, the processor and the storage medium may alternatively exist in the collection apparatus, the RU, the DU, or the network management device as discrete components.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. When the computer programs or instructions are loaded and executed on a computer, all or some of the procedures or functions according to embodiments of this application are performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any available medium that can be accessed by the computer, or a data storage device, for example, a server or a data center, integrating one or more available media. The available medium may be a magnetic medium, for example, a floppy disk, a hard disk, or a magnetic tape; may be an optical medium, for example, a digital video disc; or may be a semiconductor medium, for example, a solid-state drive.

In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

Unless otherwise specified, meanings of all technical and scientific terms used in embodiments of this application are the same as those usually understood by a person skilled in the art of this application. The terms used in this application are merely intended to describe specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
obtaining first information, wherein the first information indicates an installation status of a first apparatus of an access network device, the first information is used to obtain configuration data of the first apparatus, and the configuration data is used to activate the first apparatus; and
sending the first information.

2. The method according to claim 1, wherein
the first information comprises at least one of the following information: location information, azimuth information, or height information.

3. The method according to claim 1 or 2, wherein
sending the first information comprises: sending the first information to a network management device; and
the method further comprises: receiving the configuration data from the network management device, wherein the configuration data is associated with the first information.

4. The method according to claim 3, wherein
the method further comprises: sending the configuration data to the first apparatus.

5. The method according to claim 3 or 4, wherein
obtaining the first information comprises: collecting the first information, or receiving the first information.

6. The method according to claim 1 or 2, wherein
sending the first information comprises: sending the first information to the first apparatus.

7. The method according to any one of claims 3 to 6, wherein a manner used for communicating with the first apparatus comprises at least one of the following manners:
device-to-device, sidelink, proximity-based services, Bluetooth, wireless fidelity, wireless fidelity direct, Zigbee, radio frequency identification, infrared data association, ultra-wideband, near-field communication, Ethernet, or serial communication.

8. The method according to claim 1 or 2, wherein
sending the first information comprises: sending the first information to a baseband unit of the access network device; and
the method further comprises: receiving the configuration data from the baseband unit, wherein the configuration data is associated with the first information, and the configuration data is obtained by the baseband unit from a network management device.

9. The method according to claim 8, wherein
obtaining the first information comprises: collecting the first information or receiving the first information.

10. The method according to any one of claims 1 to 7, wherein
the first apparatus comprises a radio frequency unit and/or a baseband unit.

11. A communication method, wherein the method comprises:
receiving first information, wherein the first information indicates an installation status of a first apparatus of an access network device;
obtaining configuration data associated with the first information, wherein the configuration data is configuration data of the first apparatus, and the configuration data is used to activate the first apparatus; and
sending the configuration data.

12. The method according to claim 11, wherein
the first information comprises at least one of the following information: location information, azimuth information, or height information.

13. The method according to claim 11 or 12, wherein
receiving the first information comprises: receiving the first information from the first apparatus or a second apparatus, wherein the first apparatus is different from the second apparatus, and the first apparatus comprises a radio frequency unit and/or a baseband unit.

14. The method according to any one of claims 11 to 13, wherein
sending the configuration data comprises: sending the configuration data to the first apparatus or a second apparatus, wherein the first apparatus is different from the second apparatus, and the first apparatus comprises a radio frequency unit and/or a baseband unit.

15. A communication apparatus, comprising a module or a unit configured to perform the method according to any one of claims 1 to 14.

16. A communication apparatus, comprising:
a processor, configured to execute a computer program stored in a memory, to enable the apparatus to perform the method according to any one of claims 1 to 14.

17. The apparatus according to claim 16, wherein the apparatus further comprises the memory.

18. The apparatus according to claim 16 or 17, wherein the apparatus is a chip.

19. A computer-readable storage medium, wherein the computer-readable storage medium stores a computer program, and when the computer program is run on a computer, the computer is enabled to perform the method according to any one of claims 1 to 14.

20. A computer program product, wherein the computer program product comprises instructions for performing the method according to any one of claims 1 to 14.

21. A communication system, comprising:
a communication apparatus configured to perform the method according to any one of claims 1 to 10; and
a network management device configured to perform the method according to any one of claims 11 to 14.

22. The system according to claim 21, wherein
the communication apparatus comprises at least one of the following apparatuses: a radio frequency unit of an access network device, a baseband unit of the access network device, or a collection apparatus, wherein the collection apparatus is configured to collect first information, and the first information indicates an installation status of a first apparatus of the access network device.
